# EUROPEAN PATENT APPLICATION

(11) **EP 4 541 162 A1**
(43) Date of publication of application: **23.04.2025**
(21) Application number: 23823887.7
(22) Date of filing: 12.06.2023
(51) Int. Cl.: A01B 69/00

(54) **AGRICULTURAL FIELD WORK VEHICLE**

(30) Priority: 15.06.2022 JP 2022096366
(71) Applicant: Kubota Corporation, Osaka 556-8601 (JP)
(72) Inventor: TAMBO, Toru, Sakai-shi, Osaka 590-0908 (JP); KUBOTA, Yuki, Sakai-shi, Osaka 590-0908 (JP); TAKEOKA, Susumu, Sakai-shi, Osaka 590-0908 (JP); KAWANISHI, Daisuke, Sakai-shi, Osaka 590-0908 (JP); TSUJI, Toshiya, Sakai-shi, Osaka 590-0908 (JP)
(74) Representative: Müller-Boré & Partner Patentanwälte PartG mbB
(86) International application number: PCT/JP2023/021726
(87) International publication number: WO 2023/243597

(57) **Abstract**

An agricultural field work vehicle includes a traveling body including a steered wheel 5A, a steering mechanism 3 capable of steering the steered wheel 5A, and a steering drive device 31 capable of driving the steering mechanism 3 to operate; a route setting unit 13 configured to set a target route GL; a first steering controller 11 configured to change a state to an automatic control state where driving of the steering drive device 31 is controlled to travel along the target route GL and a non-control state where driving of the steering drive device 31 is not controlled; and a second steering controller 12 configured to control driving of the steering drive device 31 separately from the first steering controller 11 while maintaining the automatic control state in a case of the first steering controller 11 being in the automatic control state.

## Description

### Technical Field

The present invention relates to an agricultural field work vehicle.

### Background Art

For example, in an agricultural field work vehicle (in the literature, "work vehicle") disclosed in Japanese Patent Application Laid-Open No. 2017-123804, a steering controller (in the literature, "steering controller") that is able to travel along a target route (in the literature, "target movement route") is provided. The steering controller controls driving of a steering drive device (in the literature, "steering motor") to travel along the target route in an automatic control state (in the literature, "automatic entry mode").

### Citation List

### Patent Literature

Patent Literature 1: Japanese Patent Application Laid-Open No. 2017-123804

### Summary of Invention

### Technical Problem

By the way, in the agricultural field work vehicle disclosed in Japanese Patent Application Laid-Open No. 2017-123804, the steering controller controls driving of the steering drive device such that the agricultural field work vehicle travels along the target route, but it is conceivable that the agricultural field work vehicle does not travel along the target route appropriately only by the control of the steering controller. In such a case, it is considered that means for controlling driving of the steering drive device is required in addition to the control of the steering controller, but in the agricultural field work vehicle disclosed in Japanese Patent Application Laid-Open No. 2017-123804, it is necessary to manually control driving of the steering drive device by changing the state of the steering controller to a non-control state (in the literature, "automatic cutting mode") once. Therefore, in order to return the steering controller to the automatic control state, an operator is forced to perform troublesome work.

An object of the present invention is to provide an agricultural field work vehicle capable of executing further control while maintaining an automatic control state of a steering controller.

### Solution to Problem

An agricultural field work vehicle according to an aspect of the present invention includes a traveling body including a steered wheel, a steering mechanism capable of steering the steered wheel, and a steering drive device capable of driving the steering mechanism to operate; a route setting unit configured to set a target route; a first steering controller configured to change a state to an automatic control state where driving of the steering drive device is controlled to travel along the target route and a non-control state where driving of the steering drive device is not controlled; and a second steering controller configured to control driving of the steering drive device separately from the first steering controller while maintaining the automatic control state in a case of the first steering controller being in the automatic control state.

According to the present invention, the second steering controller is provided in addition to the first steering controller capable of controlling driving of the steering drive device to travel along the target route. The second steering controller is configured to control driving of the steering drive device separately from the first steering controller while maintaining the automatic control state of the first steering controller. Therefore, even in a case where the traveling along the target route is not appropriately performed only by the control of the first steering controller, the second steering controller is able to control driving of the steering drive device separately as necessary. In this case, since the automatic control state of the first steering controller is maintained, when the agricultural field work vehicle returns to a state of traveling appropriately along the target route based on the control of the second steering controller, the control of the first steering controller based on the automatic control state is able to be continued as it is. As described above, according to the present invention, it is possible to realize an agricultural field work vehicle that is able to execute further control while maintaining the automatic control state of the steering controller.

In the present invention, the first steering controller may be configured to output a first target command value to the steering drive device in the automatic control state, the first target command value being calculated to travel along the target route, and the second steering controller is configured to output a second target command value to the steering drive device, the second target command value being obtained by adding or subtracting a preset command value to or from the first target command value.

According to the present configuration, the first steering controller is configured to output the target command value to the steering drive device. Therefore, the second steering controller is able to control the steering drive device as necessary only by calculating the target command value added or subtracted based on the target command value output by the first steering controller.

In the present invention, the steering drive device may be an electric motor, and the first target command value and the second target command value may be current values, respectively.

According to the present configuration, the steering drive device is the electric motor, and the first steering controller is configured to output the current value as the target command value to the electric motor. Therefore, the second steering controller is able to control the electric motor as necessary only by calculating the current value added or subtracted based on the current value output by the first steering controller.

In the present invention, the second steering controller may be configured to control driving of the steering drive device in a case of a work device being mounted on the traveling body, and may be configured to be unable to control driving of the steering drive device in a case of the work device being not mounted on the traveling body.

It is considered that the traveling along the target route may not be appropriately performed only by the control of the first steering controller due to work of the work device. According to the present configuration, the control by the second steering controller is able to be performed only when the work device is mounted. Accordingly, it is possible to limit the control by the second steering controller to a necessary agricultural field. In addition, by unintentionally performing the control by the second steering controller in the unnecessary agricultural field, a concern that the steering control is unstable is avoided.

In the present invention, the agricultural field work vehicle may further include a determiner configured to determine whether the work device is mounted on the traveling body, in which the determiner may be configured to automatically detect the work device.

With the present configuration, the configuration in which the control of the second steering controller is enabled in a case where the work device is mounted on the traveling body and the control of the second steering controller is disabled in a case where the work device is not mounted on the traveling body is easily realized by the automatic detection of the work device.

In the present invention, the agricultural field work vehicle may further include an input unit configured to receive a manual operation; and a determiner configured to determine whether the work device is mounted on the traveling body, in which the determiner may be configured to detect the work device based on information input to the input unit by the manual operation.

With the present configuration, the configuration in which the control of the second steering controller is enabled in a case where the work device is mounted on the traveling body and the control of the second steering controller is disabled in a case where the work device is not mounted on the traveling body is easily realized only by the manual operation on the input unit.

In the present invention, the work device may be a plow.

In a case where the work device is the plow, when the plow plows an agricultural field surface, the plow receives a reaction force in one direction of left and right from the agricultural field surface with respect to a traveling direction of the agricultural field work vehicle. Therefore, the agricultural field work vehicle tends to slip in the left and right directions. According to the present configuration, even in a case where the traveling along the target route is not appropriately performed only by the control of the first steering controller, the second steering controller is able to perform, for example, the control corresponding to the slip as necessary.

In the present invention, the agricultural field work vehicle may further include an operation tool configured to receive a manual operation, in which the second steering controller may be configured to control driving of the steering drive device with priority over the first steering controller in a case of the first steering controller being in the automatic control state and the operation tool being operated.

According to the present configuration, when an operator determines that the control by the second steering controller is required, the control by the second steering controller is realized only by operating the operation tool. Accordingly, the operator is able to easily perform the separately required control while maintaining the automatic control state of the first steering controller.

In the present invention, the second steering controller may be configured not to control driving of the steering drive device and the first steering controller is configured to control driving of the steering drive device in a case of the first steering controller being in the automatic control state and the operation tool being not operated.

According to the present configuration, when the operator determines that the control by the second steering controller is not necessary, the control by the first steering controller is performed as it is when the operator does not operate the operation tool. Accordingly, by unintentionally performing the control by the second steering controller in the unnecessary agricultural field, a concern that the steering control is unstable is avoided.

In the present invention, the second steering controller may be configured to control driving of the steering drive device with priority over the first steering controller in a case of the operation tool being operated for a long time of a preset first setting time or more.

According to the present configuration, in a case where the operator presses the operation tool for a long time of the first setting time or more, the control by the second steering controller is performed. Therefore, it is possible to confirm the intention of the operator to press the operation tool for a long time regarding whether to perform the control by the second steering controller.

In the present invention, the second steering controller may be configured not to control driving of the steering drive device and the first steering controller may be configured to control driving of the steering drive device in a case of the operation tool being operated for a long time of a second setting time or more which is set to be longer than the first setting time.

When the operation tool is pressed for a long time and the control by the second steering controller is performed for a long time, it is considered that the agricultural field work vehicle may excessively turn and the steering control may be unstable. According to the present configuration, when the operation tool is operated for a long time of the second setting time or more, the control of the second steering controller is ended. As a result, a concern that the steering control is unstable is reduced.

In the present invention, the second steering controller may be configured not to control driving of the steering drive device, and the route setting unit may be configured to displace the target route to one of left and right without changing an extending direction of the target route in a case of the operation tool being operated for a short time of the first setting time or less.

With the present configuration, the operation tool is also used as each operation tool for the displacement of the target route and the control by the second steering controller.

In the present invention, the operation tool may include a first operation unit and a second operation unit, and the second steering controller may control driving of the steering drive device such that the steered wheel is directed to one of left and right with respect to a steering direction based on the control of the first steering controller in a case of the first operation unit being operated, and control driving of the steering drive device such that the steered wheel is directed to the other of left and right with respect to the steering direction based on the control of the first steering controller in a case of the second operation unit being operated.

According to the present configuration, in a case where the operator wants to adjust the steering direction to any of left and right, the operator is able to quickly adjust the traveling direction of the agricultural field work vehicle by operating any of the first operation unit and the second operation unit.

### Brief Description of Drawings

FIG. 1 is a block diagram illustrating a steering controller;
FIG. 2 is a flowchart illustrating processing in a case of a left operation button being operated;
FIG. 3 is a diagram for describing current value addition processing for left turning performed by a second steering controller;
FIG. 4 is a flowchart illustrating processing in a case of a right operation button being operated; and
FIG. 5 is a diagram for describing current value addition processing for right turning performed by the second steering controller.

### Description of Embodiments

### [Basic Configuration of Steering Control Device]

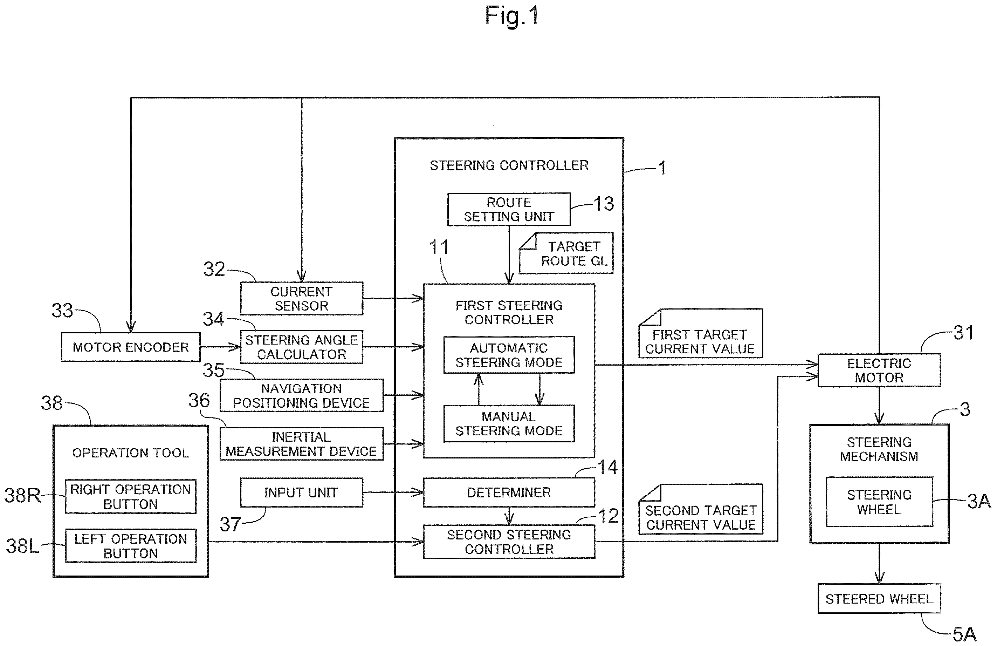

A steering controller 1 mounted on an agricultural field work vehicle will be described with reference to FIG. 1. The steering controller 1 may be a physical device such as a microcomputer or may be a combination of a device and software. Although not illustrated, the steering controller 1 includes a storage device. The storage device is, for example, a non-volatile memory (for example, a flash memory) or a ROM such as an EEPROM. The storage device stores data generated by each functional unit in the steering controller 1 primarily or constantly.

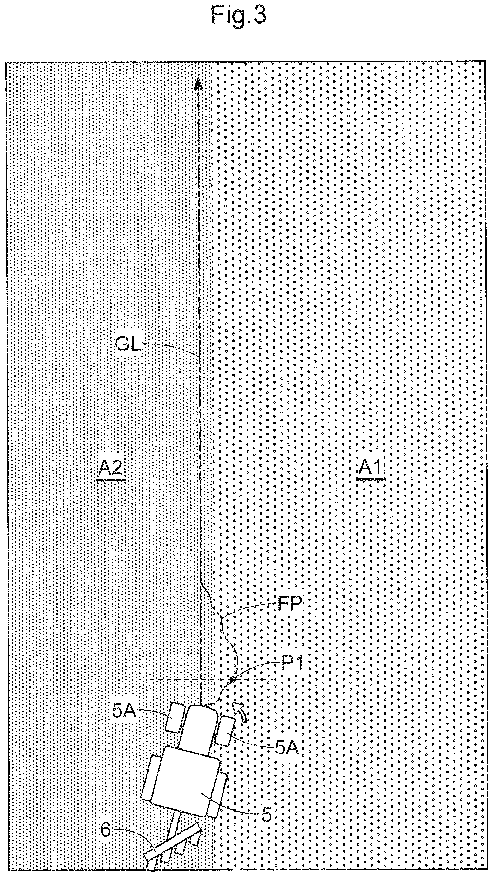

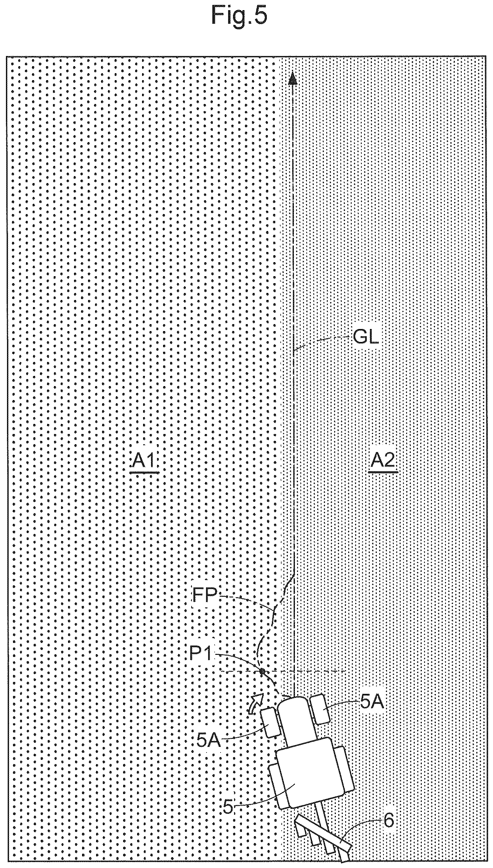

The steering controller 1 includes a first steering controller 11, a second steering controller 12, a route setting unit 13, and a determiner 14. The route setting unit 13 sets a target route GL that is a target of work traveling in a field. The work traveling refers to performing work on the field with a work device mounted on a traveling body while traveling. In the present embodiment, the target route GL is a linear route as illustrated in FIGS. 3, 5. The target route GL may be a route including a curve.

A detection value from a current sensor 32, a calculation value from a steering angle calculator 34, a positioning signal from a navigation positioning device 35, and a detection value from an inertial measurement device 36 are input to the first steering controller 11. In addition, a target current value (target command value) is output from the first steering controller 11 to an electric motor 31. The electric motor 31 is an example of an actuator for steering and corresponds to a "steering drive device" of the present invention. The target current value output from the first steering controller 11 to the electric motor 31 is referred to as a "first target current value" in the present embodiment. The first target current value is an example of a "first target command value" of the present invention. The second steering controller 12 will be described later.

The electric motor 31 is operatively connected to a steering mechanism 3, and when the electric motor 31 is driven, the steering mechanism 3 is driven. In addition, the steering mechanism 3 includes a steering wheel 3A, and the steering wheel 3A receives a steering operation of the operator.

The current sensor 32 detects an actual current value in the electric motor 31. A motor encoder 33 detects a rotation angle of the electric motor 31. The motor encoder 33 is configured to detect, for example, a rotation angle of the electric motor 31 in a range of -10800 degrees to +10800 degrees. The motor encoder 33 may be, for example, a resolver-type encoder or an optical encoder.

The steering angle calculator 34 is configured to calculate a steering angle speed of a steered wheel 5A (wheel, crawler, or the like) in the agricultural field work vehicle based on the detection value of the motor encoder 33. In addition, the steering angle calculator 34 is configured to calculate the steering angle speed of the steered wheel 5A in the agricultural field work vehicle based on an amount of change in the detection value of the motor encoder 33 per unit time. The steering angle speed of the steered wheel 5A means a speed at which a direction of the steered wheel 5A (disconnected angle of the steered wheel 5A) changes. As the steering angle speed increases, the disconnected angle of the steered wheel 5A changes more steeply.

The navigation positioning device 35 receives a positioning signal from an artificial satellite (not illustrated) used in a global navigation satellite system (GNSS, for example, GPS, GLONASS, Galileo, QZSS, BeiDou, and the like). In the present embodiment, the navigation positioning device 35 uses differential GPS (DGPS: relative positioning method), but real time kinematic GPS (RTK-GPS: interferometric positioning method) is able to also be used.

The inertial measurement device 36 is, for example, a gyroaccelerometer or a magnetic orientation sensor, and detects an angular speed of a yaw angle of the agricultural field work vehicle and accelerations in three axis directions orthogonal to each other over time. The inertial measurement device 36 is able to calculate the orientation change angle of the agricultural field work vehicle by integrating the angular speed. For this reason, measurement data measured by the inertial measurement device 36 includes data indicating the orientation (direction) of the agricultural field work vehicle. Although not described in detail, the inertial measurement device 36 is able to measure, in addition to the angular speed of the turning angle of the agricultural field work vehicle, the angular speed of right and left tilt angle of the agricultural field work vehicle, and forward and backward tilt angle of the agricultural field work vehicle, and the like. As described above, the inertial measurement device 36 detects the direction of a vehicle body of the agricultural field work vehicle.

The first steering controller 11 calculates the position coordinates of the agricultural field work vehicle over time based on the positioning data output by the navigation positioning device 35. Accordingly, the first steering controller 11 acquires the position coordinates of the agricultural field work vehicle. Further, the first steering controller 11 calculates a posture orientation of the agricultural field work vehicle based on the position coordinates of the agricultural field work vehicle and the detection value of the inertial measurement device 36. The posture orientation of the agricultural field work vehicle is an orientation in which the agricultural field work vehicle moves forward or backward while moving straight.

To describe with reference to FIG. 3, first, during the traveling of a tractor 5 which is an example of the agricultural field work vehicle, the first steering controller 11 calculates the initial posture orientation based on the current position coordinates of the tractor 5 and the position coordinates of the tractor 5 at a point where the tractor 5 has just traveled. Next, when the tractor 5 travels for a certain period of time after an initial posture orientation is calculated, the first steering controller 11 calculates a change amount of the orientation by performing integration processing on the angular speed detected by the inertial measurement device 36 during the traveling for the certain period of time.

Then, the first steering controller 11 updates the calculation result of the orientation by adding the calculated change amount of the orientation to the initial posture orientation. Thereafter, the change amount in the posture orientation is similarly calculated every certain period of time, and the calculation result of the posture orientation is sequentially updated. With the above configuration, the first steering controller 11 calculates the orientation of the tractor 5.

The steering mechanism 3 illustrated in FIG. 1 is a mechanism for steering the steered wheel 5A of the tractor 5 in the form illustrated in FIG. 3. The first steering controller 11 is configured to control the steering mechanism 3 to execute automatic steering of causing the tractor 5 to travel along the target route GL. As a control method of the first steering controller 11 with respect to the steering mechanism 3, for example, known PID control is used.

The first steering controller 11 has a plurality of control modes for controlling the steering mechanism 3. This control mode is able to be switched between a plurality of modes including a manual steering mode that is a mode in which automatic steering is not executed and an automatic steering mode that is a mode in which automatic steering is executable. This control mode may be configured to be switchable by a manual operation, or may be configured to be automatically switchable. When the operator operates the steering wheel 3A in a state where the control mode of the first steering controller 11 is the automatic steering mode, the control mode of the first steering controller 11 is switched to the manual steering mode.

When the control mode of the first steering controller 11 is the manual steering mode, the first steering controller 11 does not output the first target current value to the electric motor 31. In this case, the wheels or the crawlers of the agricultural field work vehicle are steered in accordance with the manual operation of the steering wheel 3A in the steering mechanism 3. Therefore, when the control mode of the first steering controller 11 is the manual steering mode, the state of the first steering controller 11 is a non-control state where the automatic steering is not performed.

When the control mode of the first steering controller 11 is the automatic steering mode, the first steering controller 11 is configured to control to steer the agricultural field work vehicle such that the agricultural field work vehicle performs the automatic steering traveling along the target route GL based on the positioning data output by the navigation positioning device 35 and the detection value by the inertial measurement device 36.

When the control mode of the first steering controller 11 is the automatic steering mode, the state of the first steering controller 11 is an automatic control state where the automatic steering is performed. Therefore, the first steering controller 11 outputs the first target current value for the agricultural field work vehicle to travel along the target route GL in the automatic control state to the electric motor 31.

As described above, the steering controller 1 is configured to change a state to a non-control state where automatic steering is not performed and an automatic control state where automatic steering is performed.

### [About Control of Second Steering Control Unit]

As described above, the first steering controller 11 outputs the first target current value for the agricultural field work vehicle to travel along the target route GL to the electric motor 31 in the automatic control state. However, when the steered wheel 5A or the like of the tractor 5 slips, there is a concern that the traveling direction of the tractor 5 may change significantly against the intention. In particular, in a case where the work device is a plow 6 (see FIGS. 3, 5), when the plow 6 plows an agricultural field surface, the plow 6 receives a reaction force in one direction of left and right from the agricultural field surface with respect to the traveling direction of the tractor 5. Therefore, the tractor 5 is likely to slip in the left and right directions. In addition, when the first steering controller 11 outputs the first target current value to the electric motor 31, a control gain of the first steering controller 11 tends to be set gently in order to prevent the tractor 5 from making a sudden turn. In this state, for example, when the steered wheel 5A or the like of the tractor 5 is fitted into a groove of a plowed soil A1 (see FIGS. 3, 5), there is a concern that the return may take time only with the automatic steering of the first steering controller 11.

In order to avoid such inconvenience, it is considered that the operator operates the steering wheel 3A to return the tractor 5 to the target route GL before the steered wheel 5A and the like are fitted into the groove of the plowed soil A1. However, as described above, when the operator operates the steering wheel 3A in a state where the first steering controller 11 is in the automatic control state, the first steering controller 11 changes the state from the automatic control state to the non-control state. In this case, the operator is forced to perform troublesome work in order to return the state of the first steering controller 11 to the automatic control state.

In order to solve such a problem, in the present embodiment, the second steering controller 12 is configured to control driving of the electric motor 31 separately from the first steering controller 11 while maintaining the automatic control state of the first steering controller 11 when the first steering controller 11 is in the automatic control state.

The second steering controller 12 is configured to be capable of adding or subtracting a preset current value to or from the first target current value output from the first steering controller 11. The target current value obtained by adding or subtracting to or from the first target current value output from the first steering controller 11 is referred to as a "second target current value" in the present embodiment. The second target current value is an example of a "second target command value" of the present invention. The determination result of the determiner 14 and a signal from an operation tool 38 are input to the second steering controller 12.

An input signal from an input unit 37 is input to the determiner 14. A three-point link mechanism (not illustrated) is provided at a rear portion of the traveling body of the tractor 5. The input unit 37 is configured to receive input of information related to the work device mounted on the three-point link mechanism. The determiner 14 is configured to determine whether the work device is mounted on the traveling body of the tractor 5 based on the information input to the input unit 37.

The input unit 37 may be, for example, a communication port based on ISOBUS standard (international standard ISO 11783). In this case, the determiner 14 is configured to automatically detect the work device.

In addition, the input unit 37 may be, for example, a touch panel-type operation screen display device mounted on the tractor 5, and may be configured to allow the operator to input the type of the work device by operating the operation screen display device. In this case, the determiner 14 is configured to detect the work device based on the information input to the input unit 37 by the manual operation.

The operation tool 38 is provided with a left operation button 38L and a right operation button 38R. Each of the left operation button 38L and the right operation button 38R is, for example, a seesaw-type press button switch biased to a neutral position. The condition for the second steering controller 12 to output the second target current value includes the operation of the left operation button 38L or the right operation button 38R. That is, in a case where at least one of the left operation button 38L and the right operation button 38R is operated when the first steering controller 11 is in the automatic control state, the second steering controller 12 is configured to control driving of the electric motor 31 with priority over the first steering controller 11. In other words, in a case where neither the left operation button 38L nor the right operation button 38R is operated when the first steering controller 11 is in the automatic control state, the second steering controller 12 is configured not to control driving of the electric motor 31, and the first steering controller 11 is configured to control driving of the electric motor 31. The left operation button 38L is an example of a "first operation unit" of the present invention. The right operation button 38R is an example of a "second operation unit" of the present invention.

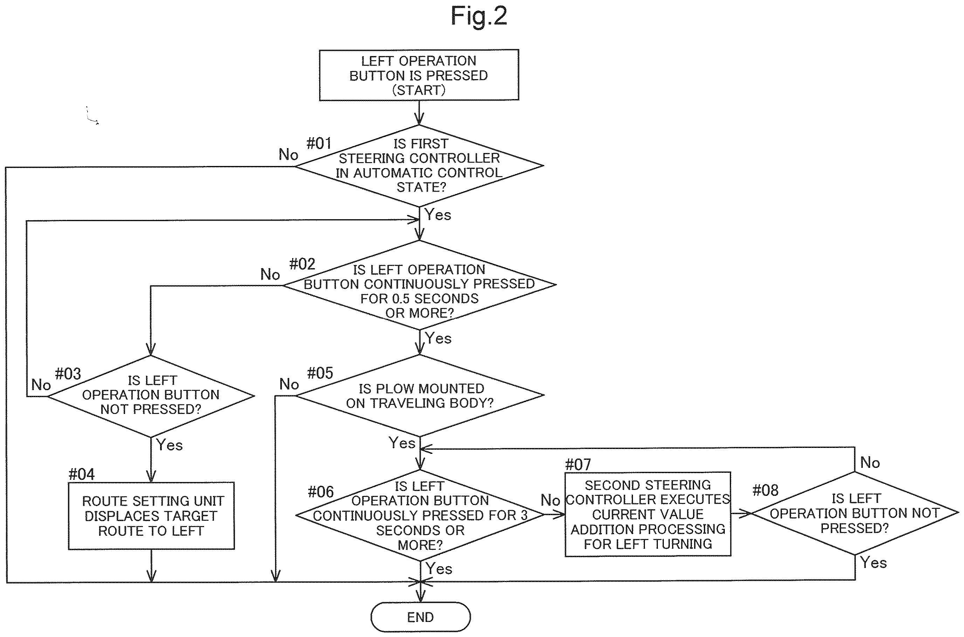

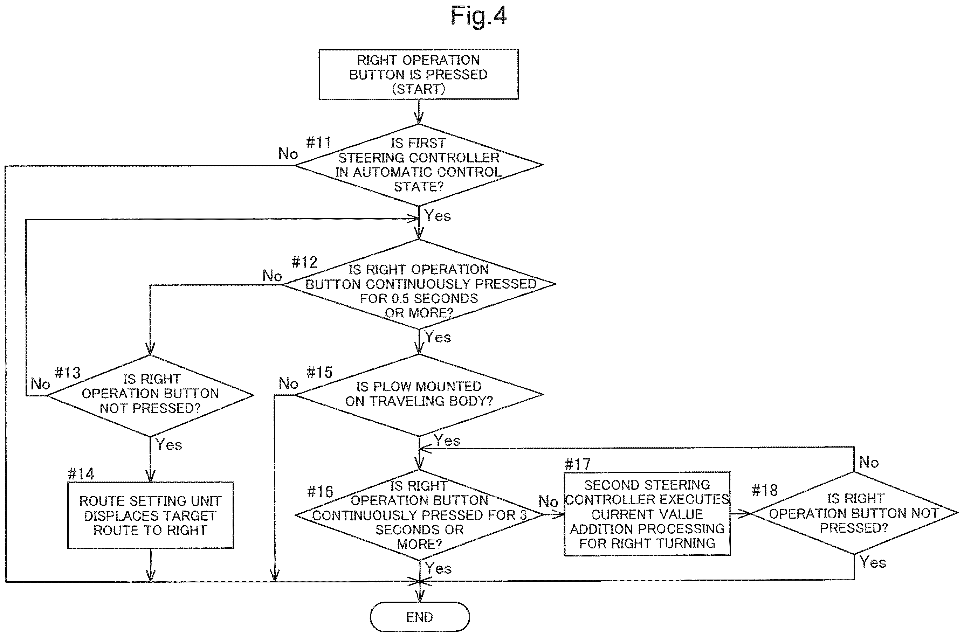

The second steering controller 12 outputs the second target current value to the electric motor 31 based on processing of the flowcharts illustrated in FIGS. 2, 4.

FIG. 2 is a flowchart when the left operation button 38L is operated. FIG. 4 is a flowchart when the right operation button 38R is operated.

The description will be made based on the flowchart of FIG. 2. When the operator presses the left operation button 38L, first, the steering controller 1 determines whether the first steering controller 11 is in the automatic control state (step #01). When the first steering controller 11 is in the non-control state (manual steering mode) (No in step #01), the processing based on the flowchart of FIG. 2 ends as it is. Then, the first steering controller 11 continuously outputs the first target current value to the electric motor 31.

When the first steering controller 11 is in the automatic control state (automatic steering mode) (Yes in step #01), the steering controller 1 determines whether the left operation button 38L is continuously pressed for 0.5 seconds or more (step #02). When the left operation button 38L is not continuously pressed for 0.5 seconds or more (No in step #02), the steering controller 1 determines whether the left operation button 38L is not pressed (step #03). 0.5 seconds is an example of a "first setting time" of the present invention.

When the left operation button 38L is not pressed within a time of less than 0.5 seconds (Yes in step #03), the route setting unit 13 displaces the target route GL to the left by, for example, 5 to 10 centimeters without changing an extending direction of the target route GL (step #04). In a case where the navigation positioning device 35 uses the above-described DGPS, it is considered that the positioning error increases with the passage of time, and the target route GL is shifted to the right by an amount of the positioning error. By shifting the target route GL to the left in step #04 by the route setting unit 13, the positional deviation of the target route GL in the left and right directions is eliminated. As described above, when the left operation button 38L is operated for a short time of less than 0.5 seconds, the second steering controller 12 is configured not to control driving of the electric motor 31, and the route setting unit 13 is configured to displace the target route GL to the left without changing the extending direction of the target route GL. Then, the processing based on the flowchart of FIG. 2 is ended as it is, and the first steering controller 11 continuously outputs the first target current value to the electric motor 31.

In a state where the left operation button 38L is not continuously pressed for 0.5 seconds or more (No in step #02), when the left operation button 38L is continuously pressed (No in step #03), the processing of step #02 and step #03 is repeated.

When the left operation button 38L is continuously pressed for 0.5 seconds or more (Yes in step #02), the steering controller 1 determines whether the plow 6 is mounted on the traveling body of the tractor 5 based on the determination result of the determiner 14 (step #05). When the plow 6 is not mounted on the traveling body of the tractor 5 (No in step #05), the processing based on the flowchart of FIG. 2 ends as it is. Then, the first steering controller 11 continuously outputs the first target current value to the electric motor 31. That is, the second steering controller 12 is configured to control driving of the electric motor 31 in a case where the plow 6 is mounted on the traveling body of the tractor 5, and is configured to be incapable of controlling driving of the electric motor 31 in a case where the plow 6 is not mounted on the traveling body of the tractor 5.

When the plow 6 is mounted on the traveling body of the tractor 5 (Yes in step #05), the steering controller 1 determines whether the left operation button 38L is continuously pressed for 3 seconds or more (step #06). When the left operation button 38L is not continuously pressed for 3 seconds or more (No in step #06), the second steering controller 12 executes current value addition processing for left turning (step #07). In step #07, the second steering controller 12 outputs the second target current value to the electric motor 31 with priority over the first steering controller 11. In this case, the first steering controller 11 does not output the first target current value to the electric motor 31, and outputs only the second target current value to the electric motor 31. That is, the second steering controller 12 is configured to control driving of the electric motor 31 with priority over the first steering controller 11 when the left operation button 38L is operated for a long time of 0.5 seconds or more. In this case, the second steering controller 12 controls driving of the electric motor 31 such that the steered wheel 5A is directed to the left side with respect to the steering direction based on the control of the first steering controller 11. Regarding the "current value addition processing for left turning", in a case where the right turning side is defined as addition and the left turning side is defined as subtraction, the "current value addition processing" may be rephrased as "current value subtraction processing".

FIG. 3 illustrates a state where the plow 6 plows the agricultural field surface while the tractor 5 advances. In the example illustrated in FIG. 3, the agricultural field surface after plowed by the plow 6 is illustrated as the plowed soil A1, and the agricultural field surface before plowed by the plow 6 is illustrated as an unplowed soil A2. The first steering controller 11 outputs the first target current value to the electric motor 31 such that the tractor 5 travels along the target route GL. However, as described above, since the plow 6 receives a reaction force in one direction of left and right from the agricultural field surface, in the example illustrated in FIG. 3, the tractor 5 slips in the right direction (side on which the plowed soil A1 is located) as illustrated in a traveling trajectory FP. Then, the operator operates the left operation button 38L at the point P1, and the second steering controller 12 executes the current value addition processing for left turning. Accordingly, even in a case where the steered wheel 5A of the tractor 5 is further steered to the left and a control gain of the first steering controller 11 is set gently, the tractor 5 is able to quickly return in the direction along the target route GL.

When the left operation button 38L is not pressed (Yes in step #08), the processing based on the flowchart of FIG. 2 is ended as it is. Then, the first steering controller 11 outputs the first target current value to the electric motor 31 again. When the left operation button 38L is continuously pressed in a state where three seconds have not elapsed after the left operation button 38L is pressed (No in step #08), step #06, step #07, and step #08 are repeated.

When the left operation button 38L is continuously pressed for 3 seconds or more (Yes in step #06), there is a concern that the tractor 5 may excessively turn. In this case as well, the processing based on the flowchart of FIG. 2 is ended as it is. Then, the first steering controller 11 outputs the first target current value to the electric motor 31 again. That is, when the left operation button 38L is operated for a long time of 3 seconds or more, the second steering controller 12 is configured not to control driving of the electric motor 31, and the first steering controller 11 is configured to control driving of the electric motor 31. The 3 seconds is an example of a "second setting time" of the present invention.

The flowchart of FIG. 4 is a flowchart in a case where the operator operates the right operation button 38R. Therefore, the processing of each step illustrated in the flowchart of FIG. 4 is the same as the processing of each step illustrated in FIG. 2 except for a difference between the left operation button 38L and the right operation button 38R, and a difference between left and right.

To supplement the flowchart of FIG. 4, in step #14, the route setting unit 13 displaces the target route GL to the right by, for example, 5 to 10 centimeters. Accordingly, for example, in a case where the target route GL is shifted to the left by the amount of the positioning error of the navigation positioning device 35, the positional deviation of the target route GL in the left and right directions is eliminated. As described above, when the right operation button 38R is operated for a short time of less than 0.5 seconds, the second steering controller 12 is configured not to control driving of the electric motor 31, and the route setting unit 13 is configured to displace the target route GL to the right without changing the extending direction of the target route GL.

To supplement the flowchart of FIG. 4, in step #17, the second steering controller 12 executes the current value addition processing for right turning. In step #17, the second steering controller 12 outputs the second target current value to the electric motor 31 with priority over the first steering controller 11. That is, the second steering controller 12 is configured to control driving of the electric motor 31 with priority over the first steering controller 11 when the right operation button 38R is operated for a long time of 0.5 seconds or more. In this case, the second steering controller 12 controls driving of the electric motor 31 such that the steered wheel 5A is directed to the right with respect to the steering direction based on the control of the first steering controller 11. In addition, in step #17, the first steering controller 11 does not output the first target current value to the electric motor 31, and outputs only the second target current value to the electric motor 31. In addition, as illustrated in step #16, when the right operation button 38R is operated for a long time of 3 seconds or more, the second steering controller 12 is configured not to control driving of the electric motor 31, and the first steering controller 11 is configured to control driving of the electric motor 31. Regarding the "current value addition processing for right turning", in a case where the left turning side is defined as addition and the right turning side is defined as subtraction, the "current value addition processing" may be rephrased as "current value subtraction processing".

FIG. 5 illustrates a state where the plow 6 plows the agricultural field surface while the tractor 5 advances. In the example illustrated in FIG. 5, the agricultural field surface after plowed by the plow 6 is illustrated as the plowed soil A1, and the agricultural field surface before plowed by the plow 6 is illustrated as the unplowed soil A2. In the example illustrated in FIG. 5, the first steering controller 11 outputs the first target current value to the electric motor 31 such that the tractor 5 travels along the target route GL, but as illustrated in the traveling trajectory FP, the tractor 5 slips in the left direction (side on which the plowed soil A1 is located). In this case, the operator operates the right operation button 38R at the point P1, and the second steering controller 12 executes the current value addition processing for right turning. Accordingly, even in a case where the steered wheel 5A of the tractor 5 is further steered to the right and the control gain of the first steering controller 11 is set gently, the tractor 5 is able to quickly return in the direction along the target route GL.

In this way, for example, when the tractor 5 slips and is likely to fit into the groove on the plowed soil A1 side, the operator steers the steered wheel 5A to the unplowed soil A2 side by operating the left operation button 38L or the right operation button 38R. From this, for example, even in a case where the tractor 5 is likely to deviate significantly from the target route GL due to the slip, the operator is able to quickly return the tractor 5 to the target route GL by operating the left operation button 38L or the right operation button 38R.

In addition, as described above, when the operator operates the steering wheel 3A in a state where the first steering controller 11 is in the automatic control state, the first steering controller 11 changes the state from the automatic control state to the non-control state. In the present embodiment, the operator is able to quickly return the tractor 5 to the target route GL only by operating the left operation button 38L or the right operation button 38R without operating the steering wheel 3A. Then, the automatic control state of the first steering controller 11 continues as it is, and the tractor 5 travels along the target route GL.

Further, as illustrated in FIGS. 2, 4, in the present embodiment, the operation tool 38 is used for both the displacement of the target route GL and the control by the second steering controller 12.

### [Other Embodiments]

The present invention is not limited to the configuration exemplified in the above-described embodiment, and representative different embodiments of the present invention will be described below.
(1) The electric motor 31 is illustrated as the "steering drive device" of the present invention. The steering drive device is not limited to the electric actuator exemplified by the electric motor 31, and may be, for example, a hydraulic actuator such as a hydraulic motor or a hydraulic cylinder, or a hybrid actuator. The hybrid actuator is, for example, a hydraulic actuator or the like that drives a hydraulic pump with an electric servo motor. In a case where the steering drive device is the hydraulic motor, the hydraulic cylinder, or the like, the target command values (the first target command value and the second target command value) of the present invention may include, for example, an opening degree of a hydraulic valve with respect to the hydraulic motor, the hydraulic cylinder, or the like. In this case, the first target command value and the second target command value are command values related to the opening degree of the hydraulic valve. That is, the first steering controller 11 may be configured to output the first target command value calculated to travel along the target route GL to the steering drive device in the automatic control state, and the second steering controller 12 may be configured to output the second target command value obtained by adding or subtracting a command value set in advance to or from the first target command value to the steering drive device.
(2) In the above-described embodiment, the first setting time is set to 0.5 seconds, and the second setting time is set to 3 seconds. The present invention is not limited to this embodiment, and the first setting time and the second setting time is able to be appropriately changed to be set.
(3) Each of the left operation button 38L and the right operation button 38R may be, for example, a lever or a soft button displayed on a touch panel-type operation screen display device. In addition, the right operation button 38R may be the first operation unit, and the left operation button 38L may be the second operation unit. In short, the second steering controller 12 may be configured to control driving of the electric motor 31 (steering drive device) such that the steered wheel 5A is directed to one of left and right with respect to the steering direction based on the control of the first steering controller 11 when the first operation unit is operated, and to control driving of the electric motor 31 (steering drive device) such that the steered wheel 5A is directed to the other of left and right with respect to the steering direction based on the control of the first steering controller 11 when the second operation unit is operated.
(4) In the above-described embodiment, the operation tool 38 is used for both the displacement of the target route GL and the control by the second steering controller 12. The present invention is not limited to this embodiment, and for example, the displacement of the target route GL may be configured to be possible by operating another operation button. In this case, when the operation tool 38 is operated, the second steering controller 12 may be configured to immediately output the second target current value (second target command value) to the electric motor 31 (steering drive device) without waiting for the long press of 0.5 seconds (first setting time). Alternatively, when the operation tool 38 is operated, the second steering controller 12 may be configured to output the second target current value (second target command value) to the electric motor 31 (steering drive device) for a certain period of time set in advance from a timing at which the operator starts to press the operation tool 38, regardless of whether the operator presses the operation tool 38 for a long time.
(5) In the current value addition processing (step #07 and step #17) illustrated in FIGS. 2, 4, the second steering controller 12 outputs the second target current value (second target command value) to the electric motor 31 (steering drive device) with priority over the first steering controller 11. The present invention is not limited to this embodiment, and the second steering controller 12 may be configured to output the current value to the electric motor 31 (steering drive device) in parallel with the first steering controller 11. In this case, the second target current value (second target command value) may be an addition value or a subtraction value set in advance. A configuration may be adopted in which a total value of the first target current value (first target command value) calculated by the first steering controller 11 and the second target current value (second target command value) which is the addition value or the subtraction value is output to the electric motor 31 (steering drive device).
(6) The first steering controller 11 controls driving of the electric motor 31 (steering drive device). The present invention is not limited thereto, and for example, the first steering controller 11 may also control the vehicle speed of the tractor 5. The agricultural field work vehicle may be configured to be capable of not only automatic steering but also automatic control of vehicle speed (including vehicle speed control in conjunction with control of the work device), automatic control of the work device, automatic turning control of the vehicle, automatic stop control of the vehicle, and the like. The automatic control of the work device includes, for example, automatic lifting and lowering control of the work device, automatic control of an angle (roll angle) of the work device, automatic control of a work width, automatic control of a work depth, automatic control of a scattering amount, automatic control of a seeding amount, automatic control of a fertilizing amount, and the like.
(7) In the above-described embodiment, the plow 6 is exemplified as the work device. The present invention is not limited to this embodiment, and the work device may be, for example, a grass cutting device (boom mower, chopper, or the like), a mulcher, a stone picker, a seeding device, a rake, a tedder, a toward-type harvesting and sorting device, a pinching device, a tillage management device, or the like.
(8) In the above-described embodiment, the tractor 5 is exemplified as the agricultural field work vehicle, but the agricultural field work vehicle may be a rice transplanter, a harvester, a spreader, a mower, a tillage cultivator, or the like.

In addition, the configuration disclosed in the above-described embodiment (including another embodiment, the same applies hereinafter) is able to be applied in combination with the configuration disclosed in another embodiment as long as there is no contradiction. In addition, the embodiments disclosed in the present specification are examples, and the embodiments of the present invention are not limited to these, and it is possible to appropriately modify the embodiments of the present invention within a range not departing from the object of the present invention.

### Industrial Applicability

The present invention is able to be applied to an agricultural field work vehicle.

### Description of Reference Numerals

3: steering mechanism
5A: steered wheel
6: plow (work device)
11: first steering controller
12: second steering controller
13: route setting unit
14: determiner
31: electric motor (steering drive device)
37: input unit
38: operation tool
38L: left operation button (first operation unit)
38R: right operation button (second operation unit)
GL: target route

## Claims

1. An agricultural field work vehicle, comprising:
a traveling body including a steered wheel, a steering mechanism capable of steering the steered wheel, and a steering drive device capable of driving the steering mechanism to operate;
a route setting unit configured to set a target route;
a first steering controller configured to change a state to an automatic control state where driving of the steering drive device is controlled to travel along the target route and a non-control state where driving of the steering drive device is not controlled; and
a second steering controller configured to control driving of the steering drive device separately from the first steering controller while maintaining the automatic control state in a case of the first steering controller being in the automatic control state.

2. The agricultural field work vehicle according to claim 1, wherein the first steering controller is configured to output a first target command value to the steering drive device in the automatic control state, the first target command value being calculated to travel along the target route, and
the second steering controller is configured to output a second target command value to the steering drive device, the second target command value being obtained by adding or subtracting a preset command value to or from the first target command value.

3. The agricultural field work vehicle according to claim 2, wherein the steering drive device is an electric motor, and
the first target command value and the second target command value are current values, respectively.

4. The agricultural field work vehicle according to any one of claims 1 to 3, wherein the second steering controller is configured to control driving of the steering drive device in a case of a work device being mounted on the traveling body, and is configured to be unable to control driving of the steering drive device in a case of the work device being not mounted on the traveling body.

5. The agricultural field work vehicle according to claim 4, further comprising:
a determiner configured to determine whether the work device is mounted on the traveling body,
wherein the determiner is configured to automatically detect the work device.

6. The agricultural field work vehicle according to claim 4, further comprising:
an input unit configured to receive a manual operation; and
a determiner configured to determine whether the work device is mounted on the traveling body,
wherein the determiner is configured to detect the work device based on information input to the input unit by the manual operation.

7. The agricultural field work vehicle according to any one of claims 4 to 6, wherein the work device is a plow.

8. The agricultural field work vehicle according to any one of claims 1 to 7, further comprising:
an operation tool configured to receive a manual operation,
wherein the second steering controller is configured to control driving of the steering drive device with priority over the first steering controller in a case of the first steering controller being in the automatic control state and the operation tool being operated.

9. The agricultural field work vehicle according to claim 8, wherein the second steering controller is configured not to control driving of the steering drive device and the first steering controller is configured to control driving of the steering drive device in a case of the first steering controller being in the automatic control state and the operation tool being not operated.

10. The agricultural field work vehicle according to claim 8, wherein the second steering controller is configured to control driving of the steering drive device with priority over the first steering controller in a case of the operation tool being operated for a long time of a preset first setting time or more.

11. The agricultural field work vehicle according to claim 10, wherein the second steering controller is configured not to control driving of the steering drive device and the first steering controller is configured to control driving of the steering drive device in a case of the operation tool being operated for a long time of a second setting time or more which is set to be longer than the first setting time.

12. The agricultural field work vehicle according to claim 10 or 11, wherein the second steering controller is configured not to control driving of the steering drive device, and the route setting unit is configured to displace the target route to one of left and right without changing an extending direction of the target route in a case of the operation tool being operated for a short time of the first setting time or less.

13. The agricultural field work vehicle according to any one of claims 8 to 12, wherein the operation tool includes a first operation unit and a second operation unit, and
the second steering controller controls driving of the steering drive device such that the steered wheel is directed to one of left and right with respect to a steering direction based on the control of the first steering controller in a case of the first operation unit being operated, and controls driving of the steering drive device such that the steered wheel is directed to the other of left and right with respect to the steering direction based on the control of the first steering controller in a case of the second operation unit being operated.
